# EUROPEAN PATENT SPECIFICATION

(11) **EP 4 231 086 B1**
(45) Date of publication and mention of the grant of the patent: **04.02.2026**
(21) Application number: 23156036.8
(22) Date of filing: 10.02.2023
(51) Int. Cl.: G02F 1/11, G02B 5/00, G02B 21/00

(54) **FAST FREQUENCY-TUNABLE OPTICAL RELAY AND METHODS OF USE**
SCHNELLES FREQUENZABSTIMMBARES OPTISCHES RELAIS UND VERFAHREN ZUR VERWENDUNG
RELAIS OPTIQUE ACCORDABLE EN FRÉQUENCE RAPIDE ET PROCÉDÉS D'UTILISATION

(30) Priority: 16.02.2022 US 202263268087 P; 19.01.2023 US 202318156472
(43) Date of publication of application: 23.08.2023
(73) Proprietor: Quantinuum LLC, Broomfield, Colorado 80021 (US)
(72) Inventor: MADJAROV, Ivaylo Sashkov, Broomfield, 80021 (US)
(74) Representative: Haseltine Lake Kempner LLP

(56) References cited:
- AU-A1- 2020 267 250
- US-A- 5 038 359
- US-A1- 2021 063 715
- RIZA N A ED - YAO JIANPING ET AL: "Acousto-optically switched optical delay lines", OPTICS COMMUNICATIONS, ELSEVIER, AMSTERDAM, NL, vol. 145, no. 1-6, 1 January 1998 (1998-01-01), pages 15 - 20, XP004102673, ISSN: 0030-4018, DOI: 10.1016/S0030-4018(97)00377-5

## Description

### TECHNICAL FIELD

Various embodiments relate to optical beam delivery systems that include a fast frequency-tunable optical relay. Various embodiments relate to providing optical beams using a fast frequency-tunable optical relay.

### BACKGROUND

In various applications, optical beams may be provided to one or more utilization locations. For example, an atom, ion, molecule, and/or the like may be located at a utilization location and one or more optical beams may be provided to the utilization location to interact with the atom, ion, molecule, and/or the like. A system may include a plurality of utilization locations to which it is desirable to be able to provide optical beams. Due to the monetary and physical space costs of lasers, it is impractical for the system to include a laser for each of utilization locations. However, conventional techniques for providing an optical beam from one laser to multiple utilization locations include the use of optical relays that each include multiple electro-optical devices (AODs; e.g., electro-optic modulators, electro-optic deflectors). However, these conventional optical relays also have significant monetary and physical space costs. Reference may be made to RIZA N A ED - YAO JIANPING ET AL: "Acousto-optically switched optical delay lines", OPTICS COMMUNICATIONS, ELSEVIER, AMSTERDAM, NL, vol. 145, no. 1-6, 1 January 1998, pages 15-20, where an optical signal is generated based on the electrical signal and the optical signal is provided to an AOD. A control signal applied to the AOD causes the optical signal to be provided to a respective delay component (e.g., an optical fiber of a particular length, specific location on the face of a stepped mirror, etc.). After the delay is introduced into the optical beam, the optical beam is converted back into an electrical signal via a photodetector. Reference may be made to US 5 038 359 A which relates to a self-pumped, optical phase conjugation method and apparatus using pseudo-conjugator to produce retroreflected seed beam. Reference may be made to AU 2020 267 250 A1 which relates to a bichromatic laser for quantum computing applications. Reference may be made to US 2021/063715 A1 which relates to an acousto-optical device and method. Through applied effort, ingenuity, and innovation many deficiencies of such optical beam delivery systems have been solved by developing solutions that are structured in accordance with the embodiments of the present invention, many examples of which are described in detail herein.

### BRIEF SUMMARY OF EXAMPLE EMBODIMENTS

The present invention is defined by the appended independent claims to which reference should now be made. Specific examples are defined in the dependent claims. Example arrangements provide fast frequency-tunable optical relay, systems that include fast frequency-tunable optical relays, and method for use thereof. In various arrangements, a fast frequency-tunable optical relay comprises one acousto-optic device (AOD; e.g., acousto-optical modulator, acousto-optical deflector, and/or the like). In various arrangements, the fast frequency-tunable optical relay is arranged and/or configured to switch between output optical beam configurations on timescales in the range of 100 ns to 100 µs (e.g., a couple microseconds).

According to one aspect, frequency-tunable optical relay is provided. In an example arrangement, the optical relay comprises one acousto-optic device (AOD) in a double pass configuration and configured to receive (a) an input optical beam propagating in a first direction toward the AOD from a first side of the AOD and (b) an electrical driving signal. The optical relay further comprises an output optical element array comprising a plurality of output optical elements disposed on the first side of the AOD. Each output optical element of the plurality of output optical elements is configured to provide a respective output optical beam substantially propagating either parallel or anti-parallel to a second direction. The plurality of output optical elements are spaced apart from one another in a third direction. The third direction is transverse to both the first direction and the second direction.

In an example arrangement, the optical relay further comprises a plurality of reflective optical assemblies disposed on a second side of the AOD, the second side of the AOD being opposite the first side of the AOD; and a parallelizing lens disposed between the AOD and the plurality of reflective optical assemblies, wherein each reflective optical assembly of the plurality of reflective optical assemblies corresponds to an output optical element of the plurality of output optical elements, and wherein each reflective optical assembly of the plurality of reflective optical assemblies is configured to cause at least a portion of an intermediate optical beam that exited the AOD to the second side of the AOD and propagated through the parallelizing lens to return to the AOD via the parallelizing lens.

In an example arrangement, each output optical element of the plurality of output optical elements and each reflective optical assembly corresponds to a respective frequency range of the electrical driving signal.

In an example arrangement, the respective frequency range corresponding to a respective reflective optical assembly of the plurality of reflective optical assemblies is determined by a physical location of at least one component of the respective reflective optical assembly with respect to the AOD.

In an example arrangement, respective frequency range corresponding to a respective output optical element of the plurality of output optical elements is determined based on a position of the respective output optical element in the third direction.

In an example arrangement, the respective frequency range corresponding to a respective output optical element of the plurality of output optical elements is independent of a position of the respective output optical element in the first direction and the second direction.

In an example arrangement, the respective frequency range has a range width of 1 to 20 MHz.

In an example arrangement, each reflective optical assembly of the plurality of reflective optical assemblies comprises a retro-reflecting prism.

In an example arrangement, at least one reflective optical assembly of the plurality of reflective optical assemblies comprises a sharp-edged mirror configured to direct the at least a portion of the intermediate beam to the retro-reflecting prism of the at least one reflective optical assembly.

In an example arrangement, the parallelizing lens is a cat's eye lens.

In an example arrangement, the parallelizing lens defines a focal length and the parallelizing lens is disposed a distance from the AOD corresponding to the focal length.

In an example arrangement, the plurality of output optical elements comprises two to eight optical elements.

In an example arrangement, a driving frequency profile of the electrical driving signal controls which one or more output optical elements of the plurality of output optical elements provides a respective output optical beam.

In an example arrangement, the AOD is configured to modulate a frequency profile of the input optical beam based at least in part on the electrical driving signal.

According to another aspect, an optical beam delivery system is provided. In an example arrangement, the optical beam delivery system comprises one or more input optical paths each configured to receive a respective input optical beam from a respective beam source and provide the respective input optical beam to a respective frequency-tunable optical relay. The optical beam delivery system comprises one or more frequency-tunable optical relays, including the respective frequency-tunable optical relay. The respective frequency-tunable optical relay comprises one acousto-optic device (AOD) in a double pass configuration and configured to receive (a) the respective input optical beam propagating in a first direction toward the AOD from a first side of the AOD and (b) a respective electrical driving signal. The respective frequency-tunable optical relay further comprises an output optical element array comprising a plurality of output optical elements disposed on the first side of the AOD. Each output optical element of the plurality of output optical elements is configured to provide a respective output optical beam substantially propagating either parallel or anti-parallel to a second direction. The plurality of output optical elements are spaced apart from one another in a third direction. The third direction is transverse to both the first direction and the second direction. The optical beam delivery system further comprise one or more output optical paths each configured to receive a respective output optical beam from a respective output optical element and provide the respective output optical beam to at least one respective beam utilization location.

In an example arrangement, the at least one respective beam utilization location is at least one position within an atomic object confinement apparatus.

In an example arrangement, the respective frequency-tunable optical relay further comprises a plurality of reflective optical assemblies disposed on a second side of the AOD, the second side of the AOD being opposite the first side of the AOD; and a parallelizing lens disposed between the AOD and the plurality of reflective optical assemblies, wherein each reflective optical assembly of the plurality of reflective optical assemblies corresponds to an output optical element of the plurality of output optical elements, and wherein each reflective optical assembly of the plurality of reflective optical assemblies is configured to cause at least a portion of an intermediate optical beam that exited the AOD to the second side of the AOD and propagated through the parallelizing lens to return to the AOD via the parallelizing lens.

In an example arrangement, each output optical element of the plurality of output optical elements and each reflective optical assembly corresponds to a respective frequency range of the respective electrical driving signal, the respective frequency range that corresponds to a respective reflective optical assembly of the plurality of reflective optical assemblies is determined by a physical location of at least one component of the respective reflective optical assembly with respect to the AOD, and the respective frequency range corresponding to a respective output optical element of the plurality of output optical elements is determined based on a position of the respective output optical element in the third direction.

In an example arrangement, the AOD is configured to modulate a frequency profile of the respective input optical beam based at least in part on the respective electrical driving signal.

According to yet another aspect, a method performed by a controller configured to control the provision of optical signals along one or more of a plurality of optical paths is provided. In an example arrangement, the method comprises determining, based on one or more computer-executable instructions, one or more particular optical paths of the plurality of optical paths along which a respective optical beam is to be provided; identifying a respective frequency range associated with a respective one of each of the one or more particular optical paths; causing an optical source to provide an input optical beam; and causing an electrical driving signal having a frequency profile comprising at least one component corresponding to the respective frequency range to be applied to an acousto-optic device (AOD) of a respective frequency-tunable optical relay. The respective frequency-tunable optical relay is configured to, responsive to receiving the electrical driving signal and the input optical beam by the AOD, provide the respective output optical beam to the one or more particular optical paths.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1 provides a schematic diagram of a top view of an example fast frequency-tunable optical relay, in accordance with an example embodiment.
Figure 2 provides a schematic diagram of a side view of the example fast frequency-tunable optical relay shown in Figure 1.
Figure 3 provides flowchart illustrating processes, procedures, and/or operations for providing optical beams to utilization locations using a fast frequency-tunable optical relay, in accordance with an example embodiment.
Figure 4 provides a block diagram of an example trapped ion quantum computer comprising a fast frequency-tunable optical relay of an example embodiment.
Figure 5 provides a schematic diagram of an example controller of a quantum computer comprising an ion trap apparatus, in accordance with an example embodiment.
Figure 6 provides a schematic diagram of an example computing entity of a quantum computer system that may be used in accordance with an example embodiment.

### DETAILED DESCRIPTION OF SOME EXAMPLE EMBODIMENTS

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. The term "or" (also denoted "/") is used herein in both the alternative and conjunctive sense, unless otherwise indicated. The terms "illustrative" and "exemplary" are used to be examples with no indication of quality level. The terms "generally" and "approximately" refer to within appropriate engineering and/or manufacturing limits and/or within user measurement capabilities, unless otherwise indicated. Like numbers refer to like elements throughout.

In various systems, it may be desired to use be able to provide optical beams generated by an optical source (e.g., a laser) to multiple utilization locations within the system. For example, the system may be an atomic, molecular, and/or optical (AMO) system, such as an array of optical traps, a system for manipulating atomic objects, and/or the like. In various embodiments, an atomic object is an ion, atom, neutral or ionic molecule, and/or the like. For example, the system may be a quantum charge-coupled device (QCCD) quantum computer such as a trapped ion quantum computer where the optical beams may be used to perform cooling (e.g., sympathetic cooling), controlled quantum state evolution (e.g., via one or more quantum gates), quantum state reading, and/or the like of an atomic object confined by an atomic object confinement apparatus. In another example, the system may be an optics-based communication system that uses a multiplexing technique to increase system bandwidth. For example, various embodiments of a fast frequency-tunable optical relay may be used as multiplexers, demultiplexers, and/or in applications where one may otherwise use an array waveguide grating (AWG), Echelle grating, and/or wavelength/frequency selective coupling element to multiplex or de-multiplex optical beams and/or signals. In various embodiments, the fast frequency-tunable optical relay is arranged and/or configured to be able to switch between output optical beam configurations on timescales in the range of 100 ns to 100 µs. For example, in an example embodiment, the fast frequency-tunable optical relay is arranged and/or configured to switch between output optical beam configurations on timescales of approximately 400 ns to 40 µs.

Various embodiments of the fast frequency-tunable optical relay provides technical improvements over conventional optical relays by providing a frequency-tunable optical array with a comparatively small form factor, reduced power consumption, and flexibility to provide a single output optical beam or to split the incoming optical power arbitrarily between a plurality of output optical beams. Thus, various embodiments provide technical solutions to various technical problems in the fields of optical relays, optical multiplexers/de-multiplexers, and similar wavelength/frequency selective optical components.

### An Example Fast Frequency-Tunable Optical Relay

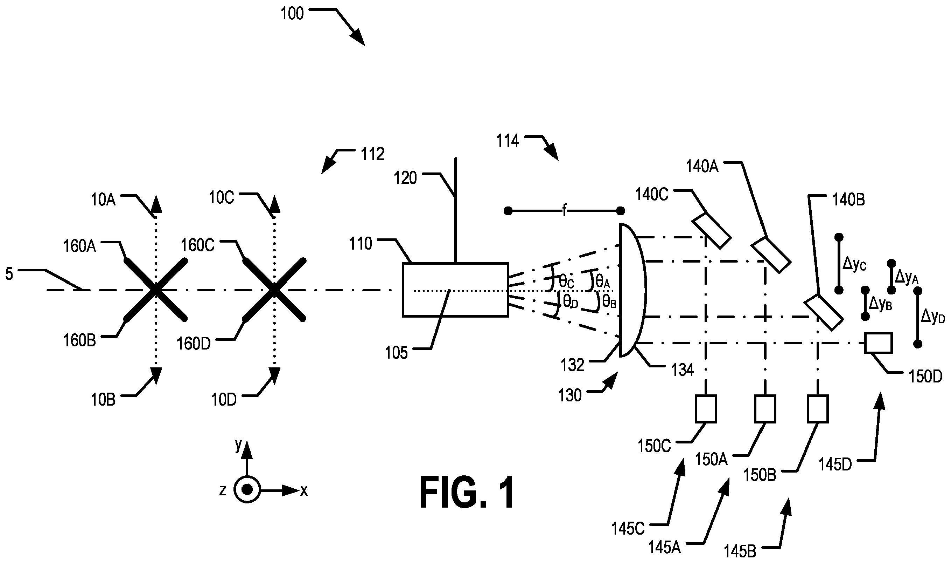

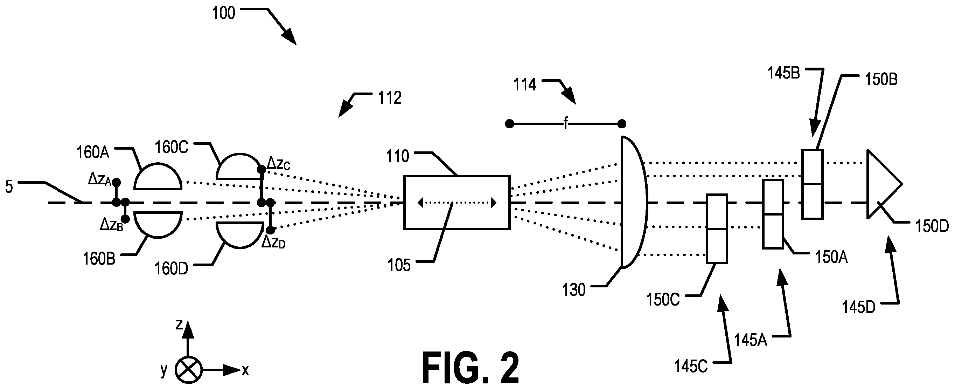

Figure 1 provides a top view and Figure 2 provides a side view of an example fast frequency-tunable optical relay 100 (also referred to herein as optical relay 100). The dashed lines indicate a propagation path substantially in the first-direction (e.g., as defined by the optical path of an input optical beam 5); the dotted lines indicate propagation paths substantially opposite the first-direction and the optical path of the output optical beams 10A, 10B, 10C, 10D as the output optical beams exit the optical relay 100; and the dot-dash lines indicate propagation paths that are traversed substantially in the first-direction and opposite the first-direction. For example, the dashed lines indicate incoming beam paths, the dotted lines indicate outgoing beam paths, and the dot-dashed lines indicate beam paths that are both the incoming and outgoing beam paths.

In various embodiments, the optical relay 100 comprises one AOD 110. For example, in various embodiments, the optical relay 100 comprises only one AOD 110. In various embodiments, the single AOD 110 is configured to perform both frequency tuning and beam directing functions of the optical relay 100. In various embodiments, the AOD 110 is an acousto-optical deflector. The AOD 110 comprises an electrical input 120 and is configured to receive an electrical driving signal (e.g., an oscillating radio-frequency (RF) electrical voltage) therethrough. The electrical driving signal is characterized by a driving frequency profile.

In various embodiments, the AOD 110 is configured as a double-pass AOD. For example, an input optical beam (e.g., a laser beam or other optical signal) may enter the AOD 110 from a first side 112 of the optical relay 100. For example, the input optical beam may be propagating in a first-direction (e.g., the positive x-direction as illustrated in Figures 1 and 2) and enter the AOD 110 from the first side 112. The AOD 110 may modulate and/or deflect the input optical beam based at least in part on an electrical driving signal (e.g., based at least in part on the driving frequency profile of the electrical driving signal) received via the electrical input 120 of the AOD 110 as the optical beam passes from the first side 112 of the optical relay 100 to the second side 114 of the optical relay 100 via the AOD 110.

In various embodiments, the optical beam is propagated back through the AOD 110 from the second side 114 of the optical relay 100 to the first side 112 of the optical relay via the AOD 110. The AOD 110 further modulates and/or deflects the optical beam based at least in part on the electrical driving signal (e.g., based at least in part on the driving frequency profile of the electrical driving signal) received via the electrical input 120 of the AOD 110 as the optical beam passes from the second side 114 of the optical relay 100 to the first side 112 of the optical relay 100 via the AOD 110. Thus, one or more output optical beams exit the AOD 110 to the first side of the optical relay 100.

The one or more output optical beams are substantially propagating anti-parallel to the first-direction (e.g., are substantially propagating in the negative x-direction). For example, the component of the propagation (e.g., component of the respective group velocities) of the one or more output optical beams in a second-direction (e.g., the y-direction as illustrated in Figures 1 and 2) are substantially equal zero. The component of the propagation (e.g., component of the respective group velocities) of the one or more output optical signals in a third-direction (e.g., the z-direction as illustrated in Figures 1 and 2) may be non-zero but have an amplitude that is smaller than the amplitude of the respective component of the propagation (e.g., the component of the respective group velocities) of the one or more output optical signals in the first-direction. In various embodiments, the first, second, and third-directions are transverse to one another. In various embodiments, the first, second, and third-directions are a basis set of three-dimensional space. For example, the first, second, and third-directions may define an orthogonal coordinate set (e.g., a Cartesian coordinate set).

The optical relay 100 further comprises an output optical element array. In various embodiments, the output optical element array comprises a plurality of output optical elements 160 (e.g., 160A, 160b, 160C, 160D). In various embodiments, each of the plurality of output optical elements is coupled to a respective channel or output optical path. For example, an output optical path is configured to provide an output optical beam provided thereto by a corresponding output optical element 160 to a respective beam utilization location. In various embodiments, a beam utilization location is a specific location, a series or sequence of specific locations, a one, two, or three-dimensional region in space, and/or the like where the output optical beam is used to perform one or more functions (e.g., cause a controlled quantum state evolution of an atomic object, form an optical trap, be incident on an optical sensor and/or component of a photonic circuit, and/or the like). In various embodiments, which channels and/or output optical paths are provided with an output optical beam at a given point in time is determined based on the driving frequency profile of the electrical driving signal applied to the electrical input 120. For example, the distribution of optical power provided to each channel as output from the optical relay 100 (e.g., via the output optical beams) is controlled by the driving frequency profile of the electrical driving signal applied to the electrical input 120. In various embodiments, the optical relay 100 has at least two channels and/or is configured to be coupled to at least two distinct output optical paths. In various embodiments, the optical relay 100 has two to eight channels and/or is configured to be coupled to two to eight distinct output optical paths. In various embodiments, the number of channels and/or distinct output optical paths is constrained by the physical size of the optical elements of the reflective optical assemblies 145, output optical elements 160, and/or the like.

In various embodiments, the driving frequency profile determines which channels are on (e.g., to which channels optical power is provided). For example, each channel is associated with a frequency range of the driving frequency profile. The portion of the optical power that is outputted to a respective channel is determined based on and/or is proportional to the portion of electrical power of the electrical driving signal that is present in the part of the driving frequency profile corresponding to the respective frequency range corresponding to the respective channel. For example, if a third of the electrical power of the electrical driving signal is in a first frequency range corresponding to a first channel and a two-thirds of the electrical power of the electrical driving signal is in a second frequency range corresponding to a second channel, at least some of the optical power output by the optical relay 100 will be provided through the first channel and a larger portion (compared to the optical power output to the first channel) of the optical power output by the optical relay 100 will be provided through the second channel. If the optical relay 100 comprises a third channel corresponding to a third frequency range and the driving frequency profile of the electrical driving signal includes approximately no power in the third frequency range, then approximately no optical power is provided through the third channel.

In various embodiments, the output optical elements comprise mirrors, lenses, gratings, prisms, and/or other optical elements. In various embodiments, an output optical element is configured to have a respective output optical beam of the one or more output optical beams 10A, 10B, 10C, 10D incident thereon and to reflect, diffract, and/or the like the respective output optical beam into a respective output path. As illustrated in Figures 1 and 2, the respective output optical paths are each either substantially parallel or anti-parallel to the second-direction. For example, each output optical element of the plurality of output optical elements is configured to provide a respective output optical beam substantially propagating either parallel or anti-parallel to the second-direction (e.g., the amplitude of the second-direction component of the group velocity of the respective output optical beam is greater than the respective amplitudes of the first and third-direction components of the group velocity of the respective output optical beam).

In various embodiments, the plurality of output optical elements are spaced apart from one another in the third-direction. The output optical beam of the one or more output optical beams that is incident on a respective output optical element is determined based on the position of the respective output optical element in the third-direction with respect to the AOD 110. For example, each of the one or more output optical beams exits the AOD 110 into the first side 112 of the optical relay propagating substantially anti-parallel to the first-direction, with a substantially zero group velocity component in the second-direction, and with a distinct group velocity component in the third-direction. The distinct group velocity component in the third-direction is determined based at least in part on at least a portion of the driving frequency profile of the electrical driving signal applied to the electrical input 120 while the optical beam was propagating through the AOD 110. For example, each of the one or more output optical beams has a unique distinct group velocity component in the third-direction that is different from each of the distinct group velocity components in the third-direction of the other output optical beams. For example, each of the one or more output optical beams is uniquely associated to one of the output optical elements based on the position of the output optical element with respect to the AOD 110 in the third-direction. In an example embodiment, the respective output optical beam associated with an output optical element is independent of the position of the output optical element in the first-direction and the second-direction (given that the output optical component is located appropriately on the first side 112 of the optical relay 100). For example, the first output optical element 160A and the second output optical element 160B are located at similar first and second-direction positions with respect to the AOD 110 but are located at different third-direction positions with respect to the AOD 110.

In various embodiments, each of the one or more output optical beams exits the AOD 110 to the first side 112 of the optical relay 100 having a group velocity that is substantially in the first-direction (e.g., the first-direction component is greater than the second-direction and the third-direction components of the group velocity of the output optical beams). In various embodiments, each of the one or more output optical beams exits the AOD 110 to the first side 112 of the optical relay 100 having a group velocity that where the second-direction component of the group velocity is substantially equal to zero. In various embodiments, each of the one or more output optical beams exits the AOD 110 to the first side 112 of the optical relay 100 having a group velocity that where the third-direction component of the group velocity is dependent on at least a portion of the driving frequency profile of the electrical driving signal applied to the electrical input 120 while the optical beam(s) resulting in the output optical beam propagated through the AOD 110.

As a result, the electrical driving signal may be selected and/or generated to generate one or more desired output optical beams at given point in time. For example, the electrical driving signal may be generated such that the electrical driving signal is characterized by a driving frequency profile of configured to cause the distribution of optical power to be distributed among the one or more output optical beams 10 in a desired manner (e.g., with respective selected amounts of optical power provided to each channel). For example, for a first period of time, it may be desired to only generate a first output optical beam 10A. The electrical driving signal applied for the first period of time is selected and/or generated to have a driving frequency profile that will result in only the first output optical beam 10A being generated. For a second period of time, it may be desired to generate a second output optical beam 10B and a third output optical beam 10C. The electrical driving signal applied for the second period of time is selected and/or generated to have a driving frequency profile that will result in the second output optical beam 10B and the third output optical beam 10C being generated. The switching time required to switch from generating the first optical beam 10A to generating the second optical beam 10B and the third optical beam 10C (e.g., the switching time required between the first period of time and the second period of time) is in the range of 100 ns to 100 µs (400 ns to 40 µs, 900 ns to 10 µs, approximately 3 µs, in some example embodiments). As should be understood, each of the respective output optical beams 10A, 10B, 10C, 10D may be generated individually or in various combinations by selection and/or generation of electrical driving signal with the appropriate driving frequency profile.

While Figures 1 and 2 illustrate the optical relay 100 being able to generate four output optical beams (e.g., having four output channels), various embodiments of the optical relay 100 are able to generate more or less than four output optical beams. For example, various embodiments of the optical relay 100 have two to eight or more output channels.

In various embodiments, in addition to the AOD 110 and the array of output optical elements, the optical relay 100 comprises a parallelizing lens 130 and/or a plurality of reflective optical assemblies 145A, 145B, 145C, 145D. In various embodiments, the parallelizing lens 130 and/or plurality of reflective optical assemblies 145 are disposed on a second side 114 of the optical relay 100. As should be understood, the first side 112 of the optical relay 100 is separated from the second side 114 of the optical relay 100 by the AOD 110.

In various embodiments, one or more intermediate optical beams exits the AOD 110 to the second side 114 of the optical relay 100. In various embodiments, the one or more intermediate optical beams are the result of the input optical beam being modulated and/or deflected by the AOD 110 as the input optical beam passed through the AOD 110 from the first side 112 of the optical relay 100 to the second side 114 of the optical relay 100.

Due to the deflection the optical beam passing through the AOD 110 based at least in part on the electrical driving signal, the one or more intermediate optical beams will be deflected from the first-direction. In various embodiments, the one or more intermediate optical beams are substantially propagating in the first-direction (e.g., in the positive x-direction). However, the respective propagation directions of the one or more intermediate beams also include components in a second-direction (e.g., the y-direction as illustrated in Figures 1 and 2) and a third-direction (e.g., the z-direction as illustrated in Figures 1 and 2). The relative amplitude of the second and third-direction propagation components (e.g., the components of the group velocity of an intermediate optical beam in the second and third-directions, respectively) compared to the first-direction propagation component (e.g., the component of the group velocity of the intermediate optical beam in the first-direction) is based at least in part on the frequency profile of the electrical driving signal. For example, the amount of deflection experienced by an optical beam passing through the AOD 110 is dependent on the frequency and/or frequencies of the electrical driving signal applied to the electrical input 120 as the optical beam is propagating through the AOD 110. The intermediate optical beams are said to be propagating substantially in the first-direction because the component of the propagation direction in the first-direction (e.g., the component of the group velocity of the intermediate optical beam in the first-direction) is greater than the respective components of the propagation direction in the second or third-directions (e.g., the respective components of the group velocity of the intermediate optical beam in the second or third-directions).

In various embodiments, the optical relay 100 further comprises a parallelizing lens 130. For example, in various embodiments, the parallelizing lens 130 is a cat's eye lens. In various embodiments, the parallelizing lens 130 is configured to have the one or more intermediate beams that are propagating with non-zero second-direction components of their group velocities incident on a first surface 132 thereof. When an intermediate optical beam exits the second surface 134 of the parallelizing lens 130, the second-direction component of the group velocity of the intermediate beam is zero. In various embodiments, the parallelizing lens 130 is characterized by a focal length f and the parallelizing lens is located a distance f (in the first-direction) from the AOD 110. For example, the optical relay 100 is configured such that the intermediate optical beam exiting the AOD 110 travels a distance f in the first-direction and is then incident on the first surface 132 of the parallelizing lens 130, in various embodiments. In various embodiments, the one or more intermediate optical beams exiting the second surface 134 of the parallelizing lens 130 continue to propagate with respective group velocities having second-direction components that are substantially equal to zero.

In various embodiments, the optical relay 100 further comprises an array reflective optical assemblies 145. For example, the optical relay 100 comprises a plurality of reflective optical assemblies 145. In various embodiments, each reflective optical assembly 145 comprises a reflective component 150 (e.g., 150A, 150B, 150C, 150D). In various embodiments, the reflective components 150 are mirrors, retro-reflective prisms, and/or the like. In various embodiments, at least one of the reflective optical assemblies 145 includes a re-directing component 140 (e.g., 140A, 140B, 140C). In an example embodiment, a re-directing component 140 is a mirror (e.g., a sharp-edged mirror, D-mirror, and/or the like), a diffractive grating, and/or the like configured to redirect a respective intermediate optical beam to the reflective component 150 of the respective reflective optical assembly 145.

In various embodiments, as the input optical beam 5 propagates through the AOD 110 from the first side 112 of the optical relay to the second side 114 of the optical relay 100, the driving frequency profile of the electrical driving signal being applied to the electrical input 120 causes the optical beam propagating through the AOD 110 to be deflected from the central axis 105 of the AOD 110. In various embodiments, the central axis 105 is substantially parallel to and/or defines the first-direction. Thus, the intermediate optical beam that exits the AOD 110 to the second side of the optical relay 100 is propagating substantially in the first-direction (e.g., the first-direction component of the group velocity is larger than both the second-direction and third-direction components of the group velocity) and with a second-direction component that causes the intermediate optical beam (and/or at least a portion thereof) to form an angle θ (e.g., θ_{A}, θ_{B}, θ_{C}, θ_{D}) from the central axis 105 of the AOD 110 in a plane defined by the first-direction and the second-direction (e.g., transverse and/or perpendicular to the third-direction). The intermediate optical beam may similarly form an angle from the central axis 105 of the AOD 110 in a plane defined by the first-direction and the third-direction (e.g., transverse and/or perpendicular to the second-direction). In various embodiments, the intermediate optical beam may comprise one or more distinct optical beams and/or a diverging optical beam formed by the deflecting of the input optical beam 5 by the AOD 110 responsive to the electrical driving signal applied to the electrical input 120.

The intermediate optical beam then interacts with the a parallelizing lens 130 which causes the group velocities of the distinct optical beams or of each portion of the diverging optical beam to be parallelized (e.g., to only have non-zero components in the first-direction). However, the distinct optical beams or each portion of the now-parallelized diverging optical beam is displaced from the central axis 105 by a characteristic amount. For example, will be displaced from the central axis 105 in the second and third-directions by an amount determined based on the first frequency ν₁. For example, when the electrical driving signal is characterized by a driving frequency profile that comprises substantially only a first frequency ν₁, the resulting intermediate optical beam forms an angle θ_{A} with respect to the central axis 105, prior to propagating through the parallelizing lens 130, and is a distance Δy_{A} in the second-direction away from the central axis 105, after propagating through the parallelizing lens 130. When the driving frequency profile is changed to be substantially characterized by a second frequency ν₂, the resulting intermediate optical beam will be displaced from the central axis 105 in the second and third-directions by an amount determined based on the second frequency ν₂. For example, when the electrical driving signal is characterized by a driving frequency profile that comprises substantially only a second frequency ν₂, the resulting intermediate optical beam forms an angle θ_{B} with respect to the central axis 105, prior to propagating through the parallelizing lens 130, and is a distance Δy_{B} in the second-direction away from the central axis 105, after propagating through the parallelizing lens 130. As should be understood, an electrical driving signal having a more complicated driving frequency profile (e.g., more complicated than a single frequency) results in the distribution of the optical power of the input optical beam across different angles and/or a range of angles with respect to the central axis 105, prior to the intermediate optical beam propagating through the parallelizing axis 130, and different displacements and/or a range of displacements with respect to the central axis 105, after the intermediate optical beam propagates though the parallelizing axis 130.

The reflective optical assemblies 145, and/or components thereof, are disposed so as to interact with specific pre-selected portions of the intermediate optical beam. For example, the reflective optical assemblies 145 and/or components thereof, are disposed so as to interact with portions of the intermediate optical beam corresponding to respective frequency ranges of the driving frequency profile of the electrical driving signal applied to the electrical input 120.

For example, in various embodiments, a first element of each reflective optical assembly 145 (e.g., re-directing component 140A, 140B, 140C, reflective component 150D) that is closest to the parallelizing lens 130 (along the optical path of the corresponding intermediate optical beam) is spaced apart from the first elements of the other reflective optical assemblies 145 in the second-direction. For example, the first re-directing component 140A is located a first second-direction displacement Δy_{A} from the central axis 105 of the AOD 110, the second redirecting component 140B is located a second second-direction displacement Δy_{B} from the central axis 105 of the AOD 110, the third redirecting component 140B is located a third second-direction displacement Δy_{C} from the central axis 105 of the AOD 110, and the fourth reflective component 150D is located a fourth second-direction displacement Δy_{D} from the central axis 105 of the AOD 110. In various embodiments, the first element of each reflective optical assembly 145 (e.g., re-directing component 140A, 140B, 140C, reflective component 150D) that is closest to the parallelizing lens 130 (along the optical path of the corresponding intermediate optical beam) is spaced apart from the first elements of the other reflective optical assemblies 145 in the third-direction, in addition to be spaced apart in the second-direction.

For example, in a first embodiment, a first channel of the optical relay (corresponding to the first output optical element 160A and first reflective assembly 145A) is configured to pass an optical beam corresponding to a first frequency range ν_{A}, ranging from ν_{A,min} to ν_{A,max}, of the driving frequency profile of the electrical driving signal. For example, the first second-direction displacement Δy_{A} from the central axis 105 is determined based on the amount of deflection the optical beam propagating through the AOD 110 while an electrical driving signal substantially characterized by one or more frequencies within the first frequency range ν_{A} is applied to the electrical input 120. A second channel of the optical relay (corresponding to the second output optical element 160B and second reflective assembly 145B) is configured to pass an optical beam corresponding to a second frequency range ν_{B}, ranging from ν_{B,min} to ν_{B,max}, of the driving frequency profile of the electrical driving signal. Thus, the second second-direction displacement Δy_{B} from the central axis 105 is determined based on the amount of deflection the optical beam propagating through the AOD 110 while an electrical driving signal substantially characterized by one or more frequencies within the second frequency range ν_{B} is applied to the electrical input 120. A third channel of the optical relay (corresponding to the third output optical element 160C and third reflective assembly 145C) is configured to pass an optical beam corresponding to a third frequency range vc, ranging from ν_{C,min} to ν_{C,max}, of the driving frequency profile of the electrical driving signal. Thus, the third second-direction displacement Δy_{C} from the central axis 105 is determined based on the amount of deflection the optical beam propagating through the AOD 110 while an electrical driving signal substantially characterized by one or more frequencies within the third frequency range ν_{C} is applied to the electrical input 120. A fourth channel of the optical relay (corresponding to the fourth output optical element 160D and fourth reflective assembly 145D) is configured to pass an optical beam corresponding to a fourth frequency range ν_{D}, ranging from, of the driving frequency profile of the electrical driving signal. In particular, fourth second-direction displacement Δy_{D} from the central axis 105 is determined based on the amount of deflection the optical beam propagating through the AOD 110 while an electrical driving signal substantially characterized by one or more frequencies within the fourth frequency range ν_{D} is applied to the electrical input 120. The reflective optical assemblies 145, and/or components thereof, are similarly disposed with appropriate third-direction displacements from the central axis 105 based on the frequency range of the respective channels. In various embodiments, the frequency ranges of the different channels (e.g., ν_{A}, ν_{B}, ν_{C}, ν_{D}) do not overlap one another.

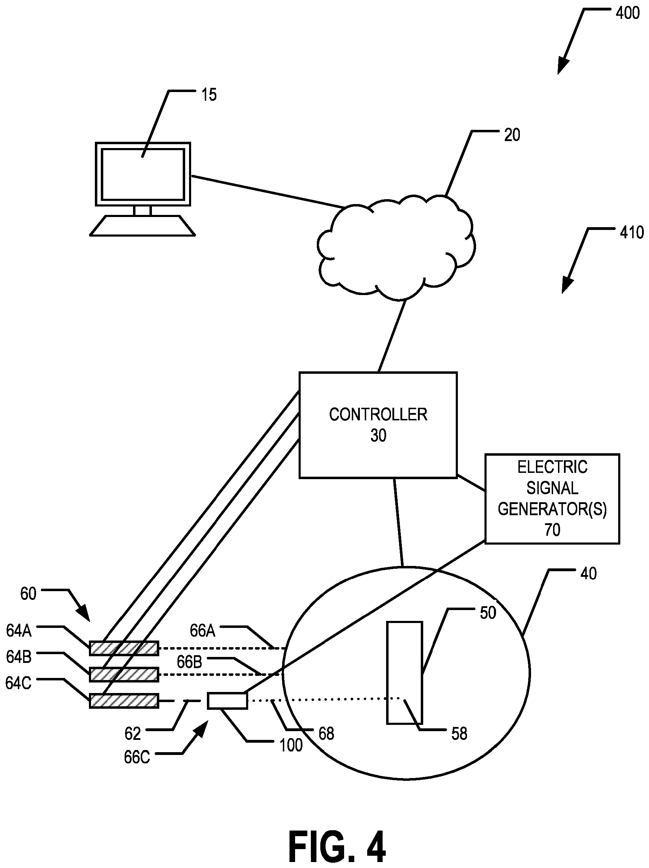

In various embodiments, the frequency ranges νᵢ have a width Δνᵢ = νᵢ,ₘₐₓ - ν_{i,min} in the range of one to twenty MHz. For example, in an example embodiment, each of the frequency ranges has a respective width that is substantially equal to 10 MHz. For example, in one embodiment, one of the frequency ranges νᵢ is defined by ν_{i,min} = 80 MHz and νᵢ,ₘₐₓ = 90 MHz. Various frequency ranges may be defined in various embodiments, as appropriate for the application, the frequency bandwidth of the AOD 110, and the electrical signal generator(s) 70 configured to generate the electrical driving signal (see Figure 4).

Once the intermediate optical beam and/or a portion thereof interacts with and/or reflects from the reflective component 150 of a respective reflective assembly 145, the intermediate optical beam and/or portion thereof propagates back toward the parallelizing lens 130 (via re-directing component 140 for at least some channels). In various embodiments, the reflective optical assembly 145 reflects the portion of the intermediate optical beam incident thereon so that the portion of the intermediate optical beam returns to the parallelizing lens 130 and the AOD 110 on a similar but slightly different path in order to spatially separate the portion of the intermediate optical beam propagating toward the reflective optical assembly 145 and the portion of the intermediate optical beam propagating away from the reflective optical assembly 145.

When the intermediate optical beam and/or portion thereof is incident on the second surface 134 of the parallelizing lens, the intermediate optical beam and/or portion thereof has a group velocity that is substantially opposite the first-direction (e.g., the second-direction and the third-direction components are substantially equal to zero). When the intermediate optical beam and/or portion thereof traverses the parallelizing lens 130 from the second surface 134 to the first surface 132, the parallelizing lens 130 deflects the intermediate optical beam and/or portion thereof toward the central axis 105 at the surface of the AOD 110. The intermediate optical beam and/or portion thereof then propagates through the AOD 110 from the second side 114 to the first side 112 of the optical relay 100 such that the one or more output optical beams exit the AOD 110 to the first side 112 of the optical relay 100. The one or more output optical beams then interact with respective ones of the output optical elements 160 to provide output optical beams to the respective output optical paths.

In various embodiments, as the one or more output optical beams propagate toward respective output optical elements 160 after exiting the AOD 110 to the first side of the optical relay 100, at least the first-direction (e.g., x-direction as illustrated in Figures 1 and 2) component and the second-direction (e.g., y-direction as illustrated in Figures 1 and 2) component of the direction of propagation (e.g., the group velocity) of the one or more output optical beams are independent of the driving frequency profile. Moreover, for a particular output optical beam, such as output optical beam 10A, for example, the direction of propagation (e.g., the group velocity) of the output optical beam 10A is independent of the driving frequency profile of the electrical driving signal for any frequency or set of frequencies within the corresponding frequency range. For example, for the first channel corresponding to first frequency range ν_{A}, ranging from ν_{A,min} to ν_{A},ₘₐₓ of the driving frequency profile of the electrical driving signal, the direction of propagation of the output optical beam is the same when the driving frequency profile comprises frequency ν₁ (and not ν₂) as when the driving frequency profile comprises frequency ν₂ (and not ν₁), when ν₁ and ν₂ are both within the first frequency range ν_{A} (e.g., ν_{A,min} ≤ ν₁ < ν₂ ≤ ν_{A},ₘₐₓ).

As should be understood, the optical frequency of the output optical beam is shifted with respect to the optical frequency of the input optical beam based on the driving frequency profile of the electrical driving signal. Thus, each channel corresponds to an output optical beam characterized by a particular optical frequency and/or optical frequency range that is shifted with respect to the optical frequency of the input optical beam based at least in part on the frequency range of the driving frequency profile corresponding to the channel.

### Example Method of using a Fast Frequency-tunable Optical Array

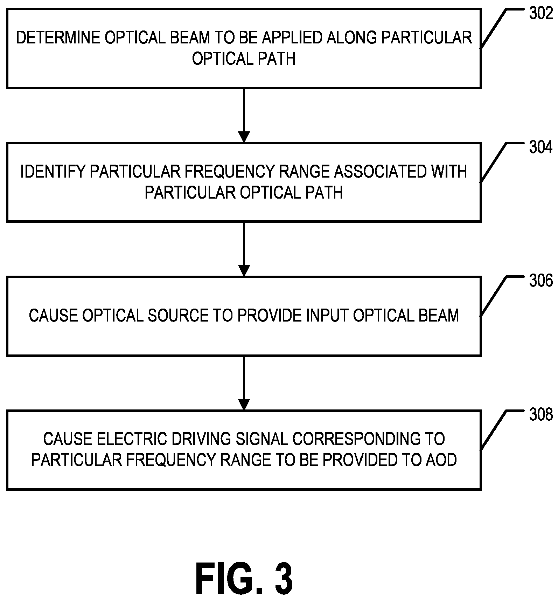

In various embodiments, a controller of an AOM system (e.g., controller 30, see Figure 4) is configured to control one or more optical relays 100 to provide frequency-tuned optical beams to respective utilization locations via one or more channels and/or output optical paths. Figure 3 provides a flowchart illustrating various processes, procedures, operations, and/or the like that may be performed, for example, by a processing device 505 of a controller 30 (e.g., based on and/or as a result of executing computer-executable instructions received via communication interface 520 and/or stored in memory 510), to provide one or more frequency-tuned optical beams to respective utilization locations using a fast frequency-tunable optical relay 100.

Starting at step/operation 302, the controller 30 determines than an optical beam is to be applied along a particular optical path (e.g., to a particular utilization location). For example, when the controller 30 is the controller of a quantum computer 410, the optical beam may be used to perform a cooling operation (e.g., via a sympathetic cooling atomic object), perform a quantum logic gate, perform a qubit reading function, perform a shelving function as part of a qubit reading function, perform a qubit state preparation function, and/or the like. For example, the controller 30 may be configured to control various components of the quantum computer 410 to cause the quantum computer 410 to execute a quantum program and/or quantum circuit. As part of performing the quantum program and/or quantum circuit, the optical beam is to be applied along the particular optical path. Based on processing the quantum program and/or quantum circuit (e.g., in preparing of machine level instructions for performing the quantum program and/or quantum circuit), the controller 30 determines that the optical beam is to be applied along the particular optical path at a particular time during the performance of the quantum program and/or quantum circuit.

At step/operation 304, the controller 30 determines a particular frequency range νᵢ associated with the particular optical path. For example, the controller 30 may store and/or otherwise have access to a look up table and/or other mechanism for determining a particular frequency range νᵢ associated with the particular optical path. For example, the particular frequency range νᵢ associated with the particular optical path is a frequency range of the driving frequency profile of the electrical driving signal to be applied to the electrical input 120 that should include an appropriate (non-zero) amount of power to cause the optical relay 100 to provide an output optical beam 10 (e.g., a non-zero amount of optical power) to the particular optical path.

At step/operation 306, the controller 30 causes the optical source 64C to provide an input optical beam 5. For example, the controller 30 may control a laser driver, for example, via a controller driver element 515 to cause the optical source 64C to provide an input optical beam. In various embodiments, the optical source 64C comprises a laser and one or more optical components configured to condition the input optical beam. The input optical beam is provided to the optical relay 100 via the input optical path 62.

At step/operation 308, the controller 30 causes an electric signal generator 70 to generate and provide an electrical driving signal. The electrical driving signal is characterized by a driving frequency profile that includes a non-zero amount of power in the particular frequency range νᵢ. The electrical driving signal is provided to the electrical input 120 of the optical relay 100.

The input optical beam that was provided to the optical relay 100 propagates through the AOD 110 as the electrical driving signal is applied to the electrical input 120. At least a portion of the input optical beam is deflected in accordance with the particular frequency range νᵢ as the input optical beam propagates through the AOD 110 from the first side 112 of the optical relay 100 to the second side 114 of the optical relay 100. The intermediate optical beam exits the AOD 110 to the second side 114 of the optical relay 100 and interacts with the parallelizing lens 130. At least a portion of the intermediate optical beam interacts with a reflective optical assembly 145 that is positioned in the second and third directions (with respect to the central axis 105 of the AOD 110) based on the amount of deflection imparted to an optical beam propagating through the AOD 110 while an electrical driving signal characterized by a frequency in the particular frequency range νᵢ is applied to the electrical input 120. For example, the at least a portion of the intermediate optical beam interacts with a reflective optical assembly 145 that corresponds to the same channel as the particular optical path.

The at least a portion of the intermediate optical beam interacts with the reflective optical assembly and is reflected back toward the parallelizing lens 130. The parallelizing lens deflects the at least a portion of the intermediate optical beam back into the AOD 110. As the at least a portion of the intermediate optical beam propagates through the AOD 10 from the second side 114 to the first side 112 of the optical relay 100, the at least a portion of the intermediate optical beam is deflected in accordance with the particular frequency range νᵢ. In particular, the deflection in the second direction experienced by the at least a portion of the intermediate optical beam propagating through the AOD 110 from the second side 114 to the first side 112, is substantially equal in amplitude and opposite in direction to the deflection in the second direction experienced by the at least a portion of the input optical beam propagating through the AOD 110 from the first side 112 to the second side 114. As a result, the total deflection in the second direction experienced by the output optical beam(s) is substantially equal to zero.

The deflection in the third direction experienced by the at least a portion of the input optical beam propagating through the AOD 110 from the first side 112 to the second side 114 and by the at least a portion of the intermediate optical beam propagating through the AOD 110 from the second side 114 to the first side 112, however, do not cancel one another out so that the corresponding output optical beam is deflected in the third direction away from the central axis 105 of the optical relay 100.

The output optical beam exits the AOD 110 to the first side 112 of the optical relay 100. The output optical beam interacts with the output optical element corresponding to the same channel as the particular optical path. The output optical element reflects, deflects, diffracts, and/or the like the output optical element into the output optical path 68 corresponding to the particular optical path. The output optical beam then propagates along the particular optical path to the corresponding utilization location.

### Example AOM System Including an Example Optical Beam Delivery System

Figure 4 provides a schematic diagram of an example AOM system that includes an example optical beam delivery system including an optical relay 100. The example AOM system shown in Figure 4 is a quantum computer system 400 comprising an atomic object confinement apparatus 50 (e.g., an ion trap) having at least one optical beam delivery system comprising an optical relay 100, in accordance with an example embodiment. In various embodiments, the quantum computer system 400 comprises a computing entity 15 and a quantum computer 410. In various embodiments, the quantum computer 410 comprises a controller 30, a cryogenic and/or vacuum chamber 40 enclosing an atomic object confinement apparatus 50, and one or more manipulation sources 60. In an example embodiment, the one or more manipulation sources 60 comprise one or more optical sources 64 (e.g., 64A, 64B, 64C). In an example embodiment, an optical source 64 is a laser (e.g., UV laser, visible laser, microwave laser, and/or the like).

In various embodiments, the one or more manipulation sources 60 are configured to generate and/or provide manipulation signals (e.g., optical beams) configured to manipulate and/or cause a controlled quantum state evolution of one or more ions within the atomic object confinement apparatus 50. For example, in an example embodiment, wherein the one or more manipulation sources 60 (e.g., the one or more optical sources 64) comprise one or more lasers, the lasers may provide one or more optical beams and/or laser beams to the atomic object confinement apparatus 50 within the cryogenic and/or vacuum chamber 40. The one or more optical sources 64 each provide an optical beam and/or the like to the atomic object confinement apparatus 50 via a corresponding beam delivery system 66 (e.g., 66A, 66B, 66C). In various embodiments, at least one beam delivery system 66C comprises an optical relay 100. In various embodiments, a beam delivery system 66C comprises one or more input optical paths 62 each configured to receive a respective input optical beam from a respective optical source 64C and provide the respective input optical beam to a respective frequency-tunable optical relay 100. The at least one beam delivery system 66C comprises one or more output optical paths (e.g., at least one optical path for each channel of the optical relay 100) each configured to receive a respective output optical beam 10 from a respective output optical element 160 and provide the respective output optical beam 10 to at least one respective beam utilization location (e.g., of the atomic object confinement apparatus 50).

The optical relay 100 may be controlled by the controller 30 via one or more electrical driving signals generated by the electrical signal generator(s) 70 provided to the electrical input 120 of the optical relay 100. For example, the controller 30 may cause one or more electrical signal generators and/or the like to provide the electrical driving signal. Via the optical relay 100 an optical source 64C may provide a frequency-tuned optical beam, via one or more selected beam paths of the beam delivery system 66C, to respective utilization locations of the atomic object confinement apparatus 50.

In various embodiments, a computing entity 15 is configured to allow a user to provide input to the quantum computer 410 (e.g., via a user interface of the computing entity 15) and receive, view, and/or the like output from the quantum computer 410. The computing entity 15 may be in communication with the controller 30 of the quantum computer 410 via one or more wired or wireless networks 20 and/or via direct wired and/or wireless communications. In an example embodiment, the computing entity 15 may translate, configure, format, and/or the like information/data, quantum computing algorithms, and/or the like into a computing language, executable instructions, command sets, and/or the like that the controller 30 can understand and/or implement.

In various embodiments, the controller 30 is configured to control the electrical signal generator(s), cryogenic system and/or vacuum system controlling the temperature and pressure within the cryogenic and/or vacuum chamber 40, manipulation sources 60, and/or other systems controlling the environmental conditions (e.g., temperature, humidity, pressure, and/or the like) within the cryogenic and/or vacuum chamber 40 and/or configured to manipulate and/or cause a controlled evolution of quantum states of one or more atomic objects (e.g., ions) within the atomic object confinement apparatus 50 (e.g., ion trap). In various embodiments, the atomic objects trapped within the atomic object confinement apparatus 50 are used as qubits of the quantum computer 410.

### Technical Advantages

Various embodiments provide optical relays 100 that each comprise a single AOD 110. The various embodiments of the fast frequency-tunable optical relay 100 provide technical improvements over conventional optical relays by providing a frequency-tunable optical array with a comparatively small form factor, reduced power consumption, and having the flexibility to provide a single output optical beam or to split the incoming optical power arbitrarily between a plurality of output optical beams. Thus, various embodiments provide technical solutions to various technical problems in the fields of optical relays, optical multiplexers/de-multiplexers, and similar wavelength/frequency selective optical components.

### Exemplary Controller

In various embodiments, an optical relay 100 is part of a beam delivery system 66 that is incorporated into a quantum computer 410 or other AOM system. In various embodiments, a quantum computer 410 further comprises a controller 30 configured to control various elements of the quantum computer 410. For example, the controller 30 may be configured to control the electric signal generator(s) 70 configured to provide electrical driving signals to control the frequency tuning and output optical path selection of the optical relay 100. The controller 30 may be further configured to control a cryogenic system and/or vacuum system controlling the temperature and pressure within the cryogenic and/or vacuum chamber 40, manipulation sources 60, and/or other systems controlling the environmental conditions (e.g., temperature, humidity, pressure, and/or the like) within the cryogenic and/or vacuum chamber 40 and/or configured to manipulate and/or cause a controlled evolution of quantum states of one or more atomic objects within the atomic object confinement apparatus 50.

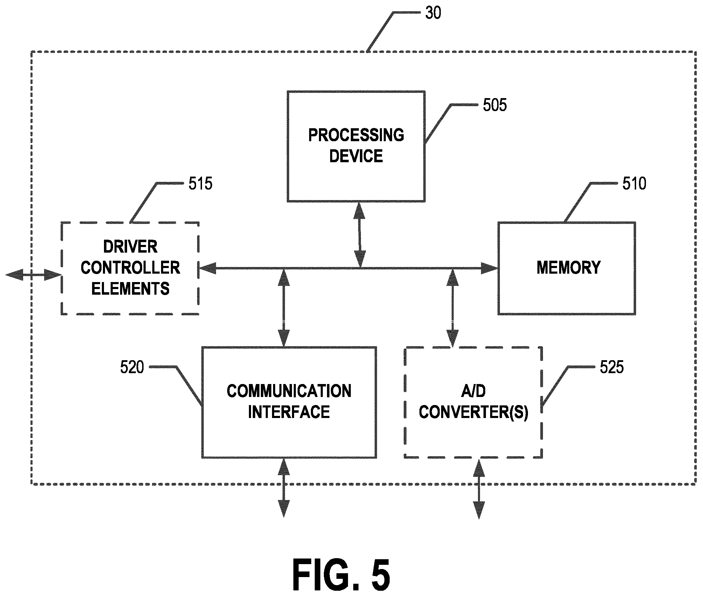

As shown in Figure 5, in various embodiments, the controller 30 may comprise various controller elements including processing elements 505, memory 510, driver controller elements 515, a communication interface 520, analog-digital converter elements 525, and/or the like. For example, the processing elements 505 may comprise programmable logic devices (CPLDs), microprocessors, coprocessing entities, application-specific instruction-set processors (ASIPs), integrated circuits, application specific integrated circuits (ASICs), field programmable gate arrays (FPGAs), programmable logic arrays (PLAs), hardware accelerators, other processing devices and/or circuitry, and/or the like. and/or controllers. The term circuitry may refer to an entirely hardware embodiment or a combination of hardware and computer program products. In an example embodiment, the processing element 505 of the controller 30 comprises a clock and/or is in communication with a clock.

For example, the memory 510 may comprise non-transitory memory such as volatile and/or non-volatile memory storage such as one or more of as hard disks, ROM, PROM, EPROM, EEPROM, flash memory, MMCs, SD memory cards, Memory Sticks, CBRAM, PRAM, FeRAM, RRAM, SONOS, racetrack memory, RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. In various embodiments, the memory 510 may store qubit records corresponding the qubits of quantum computer (e.g., in a qubit record data store, qubit record database, qubit record table, and/or the like), a calibration table, an executable queue, computer program code (e.g., in a one or more computer languages, specialized controller language(s), and/or the like), and/or the like. In an example embodiment, execution of at least a portion of the computer program code stored in the memory 510 (e.g., by a processing element 505) causes the controller 30 to perform one or more steps, operations, processes, procedures and/or the like described herein for tracking the phase of an atomic object within an atomic system and causing the adjustment of the phase of one or more manipulation sources and/or signal(s) generated thereby.

In various embodiments, the driver controller elements 515 may include one or more drivers and/or controller elements each configured to control one or more drivers. In various embodiments, the driver controller elements 515 may comprise drivers and/or driver controllers. For example, the driver controllers may be configured to cause one or more corresponding drivers to be operated in accordance with executable instructions, commands, and/or the like scheduled and executed by the controller 30 (e.g., by the processing element 505). In various embodiments, the driver controller elements 515 may enable the controller 30 to operate a manipulation source 60 (e.g., optical source 64C) to provide an input optical beam, control electric signal generator(s) 70 to provide respective electrical driving signals to respective electrical inputs 120, and/or the like. In various embodiments, the driver controller elements 515 enable the controller 30 to control and/or operate various drivers (e.g., laser drivers; vacuum component drivers; cryogenic and/or vacuum system component drivers; and/or the like). In various embodiments, the controller 30 comprises means for communicating and/or receiving signals from one or more optical receiver components such as cameras, MEMs cameras, CCD cameras, photodiodes, photomultiplier tubes, and/or the like. For example, the controller 30 may comprise one or more analog-digital converter elements 525 configured to receive signals from one or more optical receiver components, calibration sensors, and/or the like.

In various embodiments, the controller 30 may comprise a communication interface 520 for interfacing and/or communicating with a computing entity 15. For example, the controller 30 may comprise a communication interface 520 for receiving executable instructions, command sets, and/or the like from the computing entity 15 and providing output received from the quantum computer 410 (e.g., from an optical collection system) and/or the result of a processing the output to the computing entity 15. In various embodiments, the computing entity 15 and the controller 30 may communicate via a direct wired and/or wireless connection and/or one or more wired and/or wireless networks 20.

### Exemplary Computing Entity

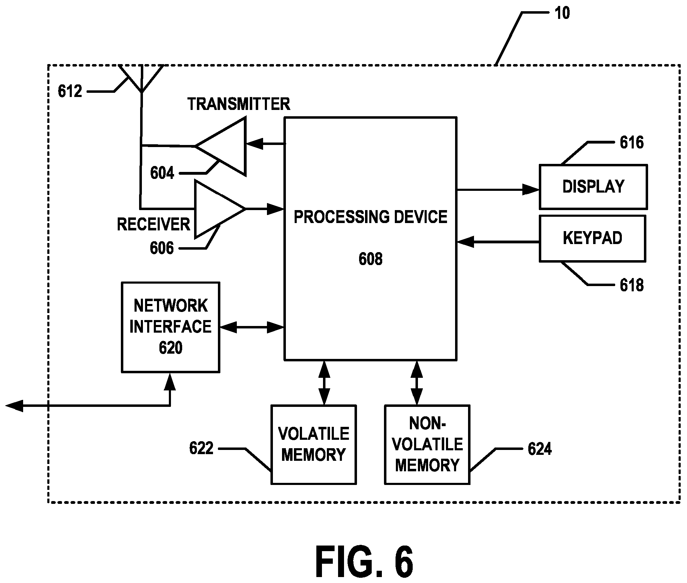

Figure 6 provides an illustrative schematic representative of an example computing entity 15 that can be used in conjunction with embodiments of the present invention. In various embodiments, a computing entity 15 is configured to allow a user to provide input to the quantum computer 410 (e.g., via a user interface of the computing entity 15) and receive, display, analyze, and/or the like output from the quantum computer 410.

As shown in Figure 6, a computing entity 15 can include an antenna 612, a transmitter 604 (e.g., radio), a receiver 606 (e.g., radio), and a processing element 608 that provides signals to and receives signals from the transmitter 604 and receiver 606, respectively. The signals provided to and received from the transmitter 604 and the receiver 606, respectively, may include signaling information/data in accordance with an air interface standard of applicable wireless systems to communicate with various entities, such as a controller 30, other computing entities 10, and/or the like. In this regard, the computing entity 15 may be capable of operating with one or more air interface standards, communication protocols, modulation types, and access types. In various embodiments, the computing entity 15 comprises a network interface 620 configured to enable communication between the computing entity 15 and the controller 30 and/or various other computing apparatuses. For example, the computing entity 15 may be configured to receive and/or provide communications using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, the computing entity 15 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra wideband (UWB), infrared (IR) protocols, near field communication (NFC) protocols, Wibree, Bluetooth protocols, wireless universal serial bus (USB) protocols, and/or any other wireless protocol. The computing entity 15 may use such protocols and standards to communicate using Border Gateway Protocol (BGP), Dynamic Host Configuration Protocol (DHCP), Domain Name System (DNS), File Transfer Protocol (FTP), Hypertext Transfer Protocol (HTTP), HTTP over TLS/SSL/Secure, Internet Message Access Protocol (IMAP), Network Time Protocol (NTP), Simple Mail Transfer Protocol (SMTP), Telnet, Transport Layer Security (TLS), Secure Sockets Layer (SSL), Internet Protocol (IP), Transmission Control Protocol (TCP), User Datagram Protocol (UDP), Datagram Congestion Control Protocol (DCCP), Stream Control Transmission Protocol (SCTP), HyperText Markup Language (HTML), and/or the like.

Via these communication standards and protocols, the computing entity 15 can communicate with various other entities using concepts such as Unstructured Supplementary Service information/data (USSD), Short Message Service (SMS), Multimedia Messaging Service (MMS), Dual-Tone Multi-Frequency Signaling (DTMF), and/or Subscriber Identity Module Dialer (SIM dialer). The computing entity 15 can also download changes, add-ons, and updates, for instance, to its firmware, software (e.g., including executable instructions, applications, program modules), and operating system.

The computing entity 15 may also comprise a user interface device comprising one or more user input/output interfaces (e.g., a display 616 and/or speaker/speaker driver coupled to a processing element 608 and a touch screen, keyboard, mouse, and/or microphone coupled to a processing element 608). For instance, the user output interface may be configured to provide an application, browser, user interface, interface, dashboard, screen, webpage, page, and/or similar words used herein interchangeably executing on and/or accessible via the computing entity 15 to cause display or audible presentation of information/data and for interaction therewith via one or more user input interfaces. The user input interface can comprise any of a number of devices allowing the computing entity 15 to receive data, such as a keypad 618 (hard or soft), a touch display, voice/speech or motion interfaces, scanners, readers, or other input device. In embodiments including a keypad 618, the keypad 618 can include (or cause display of) the conventional numeric (0-9) and related keys (#, *), and other keys used for operating the computing entity 15 and may include a full set of alphabetic keys or set of keys that may be activated to provide a full set of alphanumeric keys. In addition to providing input, the user input interface can be used, for example, to activate or deactivate certain functions, such as screen savers and/or sleep modes. Through such inputs the computing entity 15 can collect information/data, user interaction/input, and/or the like.

The computing entity 15 can also include volatile storage or memory 622 and/or non-volatile storage or memory 624, which can be embedded and/or may be removable. For instance, the non-volatile memory may be ROM, PROM, EPROM, EEPROM, flash memory, MMCs, SD memory cards, Memory Sticks, CBRAM, PRAM, FeRAM, RRAM, SONOS, racetrack memory, and/or the like. The volatile memory may be RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. The volatile and non-volatile storage or memory can store databases, database instances, database management system entities, data, applications, programs, program modules, scripts, source code, object code, byte code, compiled code, interpreted code, machine code, executable instructions, and/or the like to implement the functions of the computing entity 15.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

### Conclusion

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A frequency-tunable optical relay (100) comprising:
one acousto-optic device (110), AOD, in a double pass configuration and configured to receive a) an input optical beam (5) propagating in a first direction toward the AOD (110) from a first side (112) of the AOD (110), and b) an electrical driving signal (120), wherein the first direction is defined by a central axis of the AOD (110);
an output optical element array comprising a plurality of output optical elements (160) disposed on the first side (112) of the AOD (110), each output optical element of the plurality of output optical elements (160) configured to provide a respective output optical beam substantially propagating in a second direction or in a negative of the second direction, and the plurality of output optical elements (160) spaced apart from one another in a third direction, the first direction, the second direction, and the third direction being transverse to one another,
a plurality of reflective optical assemblies (140) disposed on a second side (114) of the AOD (110), the second side (114) of the AOD (110) being opposite the first side (112) of the AOD (110); and
a parallelizing lens (130) disposed between the AOD (110) and the plurality of reflective optical assemblies (140),
wherein each reflective optical assembly of the plurality of reflective optical assemblies (140) corresponds to an output optical element of the plurality of output optical elements (160), and
wherein each reflective optical assembly of the plurality of reflective optical assemblies (140) is configured to cause at least a portion of an intermediate optical beam that exited the AOD (110) to the second side (114) of the AOD (110) and propagated through the parallelizing lens (130) to the reflective optical assembly along a first path to return to the AOD (110) via the parallelizing lens (130) along a second path that is spatially separated from the first path.

2. The frequency-tunable optical relay (100) of claim 1, wherein each output optical element of the plurality of output optical elements (160) and each reflective optical assembly corresponds to a respective frequency range of the electrical driving signal (120).

3. The frequency-tunable optical relay (100) of claim 2, wherein the respective frequency range corresponding to a respective reflective optical assembly of the plurality of reflective optical assemblies (140) is determined by a physical location of at least one component of the respective reflective optical assembly with respect to the AOD (110).

4. The frequency-tunable optical relay (100) of claim 2 or 3, wherein the respective frequency range corresponding to a respective output optical element of the plurality of output optical elements (160) is determined based on a position of the respective output optical element in the third direction.

5. The frequency-tunable optical relay (100) of claim 2, 3 or 4, wherein the respective frequency range corresponding to a respective output optical element of the plurality of output optical elements (160) is independent of a position of the respective output optical element in the first direction and the second direction.

6. The frequency-tunable optical relay (100) of any of claims 2 to 5, wherein the respective frequency range has a range width of 1 to 20 MHz.

7. The frequency-tunable optical relay (100) of any of the preceding claims, wherein each reflective optical assembly of the plurality of reflective optical assemblies (140) comprises a retro-reflecting prism.

8. The frequency-tunable optical relay (100) of claim 7, wherein at least one reflective optical assembly of the plurality of reflective optical assemblies (140) comprises a sharp-edged mirror configured to direct the at least a portion of the intermediate beam to the retro-reflecting prism of the at least one reflective optical assembly.

9. The frequency-tunable optical relay (100) of any of the preceding claims, wherein the parallelizing lens (130) is a cat's eye lens.

10. The frequency-tunable optical relay (100) of any of the preceding claims, wherein the parallelizing lens (130) defines a focal length and the parallelizing lens (130) is disposed a distance from the AOD (110) corresponding to the focal length.

11. The frequency-tunable relay (100) of any of the preceding claims, wherein the plurality of output optical elements (160) comprises two to eight optical elements.

12. The frequency-tunable relay (100) of any of the preceding claims, wherein a driving frequency profile of the electrical driving signal (120) controls which one or more output optical elements of the plurality of output optical elements (160) provides a respective output optical beam.

13. The frequency-tunable relay (100) of any of the preceding claims, wherein the AOD (110) is configured to modulate a frequency profile of the input optical beam (5) based at least in part on the electrical driving signal (120).

14. A method performed by a controller configured to control the provision of optical signals along one or more of a plurality of optical paths, the method comprising:
determining (302), based on one or more computer-executable instructions, one or more particular optical paths of the plurality of optical paths along each of which a respective optical beam is to be provided;
identifying (304) a respective frequency range associated with each of the one or more particular optical paths;
causing (306) an optical source to provide an input optical beam along a central axis of an acousto-optic device, AOD, of a respective frequency-tunable optical relay; and
causing (308) an electrical driving signal having a frequency profile comprising at least one component corresponding to each respective frequency range to be applied to the AOD of the respective frequency-tunable optical relay,
wherein the respective frequency-tunable optical relay is configured to, responsive to receiving the electrical driving signal and the input optical beam by the AOD, provide each respective output optical beam to its respective particular optical path of the one or more particular optical paths, wherein each respective output optical beam is provided to its respective particular optical path of the one or more particular optical paths via a respective output optical element that is separated from the central axis of the AOD of the respective frequency-tunable optical relay.

## Patentansprüche

1. Frequenzabstimmbares optisches Relais (100) umfassend:
eine akustooptische Vorrichtung (110) (AOD) in einer Doppeldurchgangskonfiguration, die konfiguriert ist, um a) einen optischen Eingangsstrahl (5), der sich von einer ersten Seite (112) der AOD (110) in eine erste Richtung zu der AOD (110) hin ausbreitet, und b) ein elektrisches Antriebssignal (120) zu empfangen, wobei die erste Richtung durch eine Mittelachse der AOD (110) definiert ist;
ein Array optischer Ausgangselemente, umfassend eine Vielzahl von optischen Ausgangselementen (160), die auf der ersten Seite (112) der AOD (110) angeordnet sind, wobei jedes optische Ausgangselement der Vielzahl von optischen Ausgangselementen (160) konfiguriert ist, um einen jeweiligen optischen Ausgangsstrahl bereitzustellen, der sich im Wesentlichen in eine zweite Richtung oder in ein Negativ der zweiten Richtung ausbreitet, und die Vielzahl von optischen Ausgangselementen (160) in einer dritten Richtung voneinander beabstandet sind, wobei die erste Richtung, die zweite Richtung und die dritte Richtung quer zueinander sind,
eine Vielzahl von reflektierenden optischen Baugruppen (140), die auf einer zweiten Seite (114) der AOD (110) angeordnet sind, wobei die zweite Seite (114) der AOD (110) gegenüber der ersten Seite (112) der AOD (110) ist; und
eine Parallelisierungslinse (130), die zwischen der AOD (110) und der Vielzahl von reflektierenden optischen Baugruppen (140) angeordnet ist,
wobei jede reflektierende optische Baugruppe der Vielzahl von reflektierenden optischen Baugruppen (140) einem optischen Ausgangselement der Vielzahl von optischen Ausgangselementen (160) entspricht und
wobei jede reflektierende optische Baugruppe der Vielzahl von reflektierenden optischen Baugruppen (140) konfiguriert ist, um zu veranlassen, dass mindestens ein Abschnitt eines optischen Zwischenstrahls, der aus der AOD (110) zu der zweiten Seite (114) der AOD (110) austrat und sich durch die Parallelisierungslinse (130) zu der reflektierenden optischen Baugruppe entlang eines ersten Pfades ausbreitete, über die Parallelisierungslinse (130) entlang eines zweiten Pfades, der räumlich von dem ersten Pfad getrennt ist, zu der AOD (110) zurückkehrt.

2. Frequenzabstimmbares optisches Relais (100) nach Anspruch 1, wobei jedes optische Ausgangselement der Vielzahl von optischen Ausgangselementen (160) und jede reflektierende optische Baugruppe einem jeweiligen Frequenzbereich des elektrischen Antriebssignals (120) entspricht.

3. Frequenzabstimmbares optisches Relais (100) nach Anspruch 2, wobei der jeweilige Frequenzbereich, der einer jeweiligen reflektierenden optischen Baugruppe der Vielzahl von reflektierenden optischen Baugruppen (140) entspricht, durch eine physikalische Position mindestens einer Komponente der jeweiligen reflektierenden optischen Baugruppe in Bezug auf die AOD (110) bestimmt ist.

4. Frequenzabstimmbares optisches Relais (100) nach Anspruch 2 oder 3, wobei der jeweilige Frequenzbereich, der einem jeweiligen optischen Ausgangselement der Vielzahl von optischen Ausgangselementen (160) entspricht, basierend auf einer Position des jeweiligen optischen Ausgangselements in der dritten Richtung bestimmt ist.

5. Frequenzabstimmbares optisches Relais (100) nach Anspruch 2, 3 oder 4, wobei der jeweilige Frequenzbereich, der einem jeweiligen optischen Ausgangselement der Vielzahl von optischen Ausgangselementen (160) entspricht, unabhängig von einer Position des jeweiligen optischen Ausgangselements in der ersten Richtung und der zweiten Richtung ist.

6. Frequenzabstimmbares optisches Relais (100) nach einem der Ansprüche 2 bis 5, wobei der jeweilige Frequenzbereich eine Bereichsbreite von 1 bis 20 MHz aufweist.

7. Frequenzabstimmbares optisches Relais (100) nach einem der vorhergehenden Ansprüche, wobei jede reflektierende optische Baugruppe der Vielzahl von reflektierenden optischen Baugruppen (140) ein retroreflektierendes Prisma umfasst.

8. Frequenzabstimmbares optisches Relais (100) nach Anspruch 7, wobei mindestens eine reflektierende optische Baugruppe der Vielzahl von reflektierenden optischen Baugruppen (140) einen scharfkantigen Spiegel umfasst, der konfiguriert ist, um den mindestens einen Abschnitt des Zwischenstrahls auf das retroreflektierende Prisma der mindestens einen reflektierenden optischen Baugruppe zu richten.

9. Frequenzabstimmbares optisches Relais (100) nach einem der vorhergehenden Ansprüche, wobei die Parallelisierungslinse (130) eine Katzenaugenlinse ist.

10. Frequenzabstimmbares optisches Relais (100) nach einem der vorhergehenden Ansprüche, wobei die Parallelisierungslinse (130) eine Brennweite definiert und die Parallelisierungslinse (130) in einem der Brennweite entsprechenden Abstand von der AOD (110) angeordnet ist.

11. Frequenzabstimmbares Relais (100) nach einem der vorhergehenden Ansprüche, wobei die Vielzahl von optischen Ausgangselementen (160) zwei bis acht optische Elemente umfasst.

12. Frequenzabstimmbares Relais (100) nach einem der vorhergehenden Ansprüche, wobei ein Antriebsfrequenzprofil des elektrischen Antriebssignals (120) steuert, welches eine oder welche mehreren optischen Ausgangselemente der Vielzahl von optischen Ausgangselementen (160) einen jeweiligen optischen Ausgangsstrahl bereitstellt.

13. Frequenzabstimmbares Relais (100) nach einem der vorhergehenden Ansprüche, wobei die AOD (110) konfiguriert ist, um ein Frequenzprofil des optischen Eingangsstrahls (5) mindestens teilweise basierend auf dem elektrischen Antriebssignals (120) zu modulieren.

14. Verfahren, das von einer Steuerung durchgeführt wird, die konfiguriert ist, um die Bereitstellung von optischen Signalen entlang eines oder mehrerer einer Vielzahl von optischen Pfaden zu steuern, wobei das Verfahren Folgendes umfasst:
Bestimmen (302) eines oder mehrerer spezieller optischer Pfade der Vielzahl von optischen Pfaden, entlang derer jeweils ein entsprechender optischer Strahl bereitgestellt werden soll, basierend auf einer oder mehreren computerausführbaren Anweisungen;
Identifizieren (304) eines jeweiligen Frequenzbereichs, der mit jedem des einen oder der mehreren speziellen optischen Pfade verknüpft ist;
Veranlassen (306), dass eine optische Quelle einen optischen Eingangsstrahl entlang einer Mittelachse einer akustooptischen Vorrichtung (AOD) eines jeweiligen frequenzabstimmbaren optischen Relais bereitstellt; und
Veranlassen (308), dass ein elektrisches Antriebssignal, das ein Frequenzprofil, umfassend mindestens eine jedem jeweiligen Frequenzbereich entsprechende Komponente, aufweist, an die AOD des jeweiligen frequenzabstimmbaren optischen Relais angelegt wird,
wobei das jeweilige frequenzabstimmbare optische Relais konfiguriert ist, um als Antwort auf das Empfangen des elektrischen Antriebssignals und des optischen Eingangsstrahls durch die AOD jeden jeweiligen optischen Ausgangsstrahl seinem jeweiligen speziellen optischen Pfad des einen oder der mehreren speziellen optischen Pfade bereitzustellen, wobei jeder jeweilige optische Ausgangsstrahl seinem jeweiligen speziellen optischen Pfad des einen oder der mehreren speziellen optischen Pfade über ein jeweiliges optisches Ausgangselement bereitgestellt wird, das von der Mittelachse der AOD des jeweiligen frequenzabstimmbaren optischen Relais getrennt ist.

## Revendications

1. Relais optique accordable en fréquence (100) comprenant :
un dispositif acousto-optique (110), AOD, dans une configuration à double passage et configuré pour recevoir a) un faisceau optique d'entrée (5) se propageant dans une première direction vers l'AOD (110) depuis une première face (112) de l'AOD (110), et b) un signal de commande électrique (120), dans lequel la première direction est définie par un axe central de l'AOD (110) ;
un réseau d'éléments optiques de sortie comprenant une pluralité d'éléments optiques de sortie (160) disposés sur la première face (112) de l'AOD (110), chaque élément optique de sortie de la pluralité d'éléments optiques de sortie (160) étant configuré pour fournir un faisceau optique de sortie respectif se propageant sensiblement dans une deuxième direction ou dans une direction inverse de la deuxième direction, et la pluralité d'éléments optiques de sortie (160) étant espacés les uns des autres dans une troisième direction, la première direction, la deuxième direction, et la troisième direction étant transversales les unes aux autres,
une pluralité d'ensembles optiques réfléchissants (140) disposés sur une seconde face (114) de l'AOD (110), la seconde face (114) de l'AOD (110) étant opposée à la première face (112) de l'AOD (110) ; et
une lentille de parallélisation (130) disposée entre l'AOD (110) et la pluralité d'ensembles optiques réfléchissants (140),
dans lequel chaque ensemble optique réfléchissant de la pluralité d'ensembles optiques réfléchissants (140) correspond à un élément optique de sortie de la pluralité d'éléments optiques de sortie (160), et
dans lequel chaque ensemble optique réfléchissant de la pluralité d'ensembles optiques réfléchissants (140) est configuré pour amener au moins une partie d'un faisceau optique intermédiaire qui est sorti de l'AOD (110) vers la seconde face (114) de l'AOD (110) et s'est propagé à travers la lentille de parallélisation (130) vers l'ensemble optique réfléchissant le long d'un premier chemin à retourner à l'AOD (110) via la lentille de parallélisation (130) le long d'un second chemin qui est spatialement séparé du premier chemin.

2. Relais optique accordable en fréquence (100) selon la revendication 1, dans lequel chaque élément optique de sortie de la pluralité d'éléments optiques de sortie (160) et chaque ensemble optique réfléchissant correspond à une plage de fréquences respective du signal de commande électrique (120).

3. Relais optique accordable en fréquence (100) selon la revendication 2, dans lequel la plage de fréquences respective correspondant à un ensemble optique réfléchissant respectif de la pluralité d'ensembles optiques réfléchissants (140) est déterminée par l'emplacement physique d'au moins une composante de l'ensemble optique réfléchissant respectif par rapport à l'AOD (110).

4. Relais optique accordable en fréquence (100) selon la revendication 2 ou 3, dans lequel la plage de fréquences respective correspondant à un élément optique de sortie respectif de la pluralité d'éléments optiques de sortie (160) est déterminée sur la base d'une position de l'élément optique de sortie respectif dans la troisième direction.

5. Relais optique accordable en fréquence (100) selon la revendication 2, 3 ou 4, dans lequel la plage de fréquences respective correspondant à un élément optique de sortie respectif de la pluralité d'éléments optiques de sortie (160) est indépendante d'une position de l'élément optique de sortie respectif dans la première direction et la deuxième direction.

6. Relais optique accordable en fréquence (100) selon l'une quelconque des revendications 2 à 5, dans lequel la plage de fréquences respective présente une largeur de plage de 1 à 20 MHz.

7. Relais optique accordable en fréquence (100) selon l'une quelconque des revendications précédentes, dans lequel chaque ensemble optique réfléchissant de la pluralité d'ensembles optiques réfléchissants (140) comprend un prisme rétroréfléchissant.

8. Relais optique accordable en fréquence (100) selon la revendication 7, dans lequel au moins un ensemble optique réfléchissant de la pluralité d'ensembles optiques réfléchissants (140) comprend un miroir à bords tranchants configuré pour diriger l'au moins une partie du faisceau intermédiaire vers le prisme rétroréfléchissant de l'au moins un ensemble optique réfléchissant.

9. Relais optique accordable en fréquence (100) selon l'une quelconque des revendications précédentes, dans lequel la lentille de parallélisation (130) est une lentille œil-de-chat.

10. Relais optique accordable en fréquence (100) selon l'une quelconque des revendications précédentes, dans lequel la lentille de parallélisation (130) définit une distance focale et la lentille de parallélisation (130) est disposée à une distance de l'AOD (110) correspondant à la distance focale.

11. Relais accordable en fréquence (100) selon l'une quelconque des revendications précédentes, dans lequel la pluralité d'éléments optiques de sortie (160) comprend de deux à huit éléments optiques.

12. Relais accordable en fréquence (100) selon l'une quelconque des revendications précédentes, dans lequel un profil de fréquence de commande du signal de commande électrique (120) commande lequel ou lesquels des éléments optiques de sortie parmi la pluralité d'éléments optiques de sortie (160) fournissent un faisceau optique de sortie respectif.

13. Relais accordable en fréquence (100) selon l'une quelconque des revendications précédentes, dans lequel l'AOD (110) est configuré pour moduler un profil de fréquence du faisceau optique d'entrée (5) sur la base au moins en partie du signal de commande électrique (120).

14. Procédé réalisé par un dispositif de commande configuré pour commander la fourniture de signaux optiques le long de l'un ou plusieurs d'une pluralité de chemins optiques, le procédé comprenant :
la détermination (302), sur la base d'une ou plusieurs instructions exécutables par ordinateur, d'un ou plusieurs chemins optiques particuliers parmi la pluralité de chemins optiques le long de chacun desquels un faisceau optique respectif doit être fourni ;
l'identification (304) d'une plage de fréquences respective associée à chacun des un ou plusieurs chemins optiques particuliers ;
le fait d'amener (306) une source optique à fournir un faisceau optique d'entrée le long d'un axe central d'un dispositif acousto-optique, AOD, d'un relais optique accordable en fréquence respectif ; et
le fait d'amener (308) un signal de commande électrique présentant un profil de fréquence comprenant au moins une composante correspondant à chaque plage de fréquences respective à appliquer à l'AOD du relais optique accordable en fréquence respectif,
dans lequel le relais optique accordable en fréquence respectif est configuré pour, en réponse à la réception du signal de commande électrique et du faisceau optique d'entrée par l'AOD, fournir chaque faisceau optique de sortie respectif à son chemin optique particulier respectif parmi les un ou plusieurs chemins optiques particuliers, dans lequel chaque faisceau optique de sortie respectif est fourni à son chemin optique particulier respectif parmi les un ou plusieurs chemins optiques particuliers via un élément optique de sortie respectif qui est séparé de l'axe central de l'AOD du relais optique accordable en fréquence respectif.
